# EUROPÄISCHE PATENTSCHRIFT

(11) **EP 2 801 788 B1**
(45) Veröffentlichungstag und Bekanntmachung des Hinweises auf die Patenterteilung: **04.12.2019**
(21) Anmeldenummer: 14166993.7
(22) Anmeldetag: 05.05.2014
(51) Int. Cl.: G01B 11/27

(54) **Vorrichtung und Verfahren zum Ermitteln der relativen Lage von mechanischen Elementen**
Device and method for determining the alignment of mechanical elements
Dispositif et méthode de détermination de l'alignement d'éléments mécaniques

(30) Priorität: 06.05.2013 DE 102013007662
(43) Veröffentlichungstag der Anmeldung: 12.11.2014
(73) Patentinhaber: Prüftechnik Dieter Busch GmbH, 85737 Ismaning (DE)
(72) Erfinder: Hölzl, Roland, 81369 München (DE)

(56) Entgegenhaltungen:
- EP-A2- 1 154 229
- DE-A1- 10 252 082
- DE-A1-102006 023 926
- DE-A1-102008 037 176

## Beschreibung

Die Erfindung betrifft eine Vorrichtung zum Ermitteln der Lage eines ersten und eines zweiten mechanischen Elements zueinander, mit einer ersten Messeinheit zum Ansetzen an das erste mechanische Element und einer zweiten Messeinheit zum Ansetzen an das zweite mechanische Element sowie einer Auswerteeinheit.

Einer solche Vorrichtung kann beispielsweise zum Ermitteln der Ausrichtung von zwei Wellen zueinander ausgebildet sein.

Typischerweise weist bei solchen Ausrichtmessvorrichtungen mindestens einer der beiden Messeinheiten eine Lichtquelle zum Erzeugen eines Lichtstrahls auf, dessen Auftreffpunkt auf einem oder mehreren Detektoren an der anderen Messeinheit oder auf einem Detektor an der mit der Lichtquelle versehenen Messeinheit ermittelt wird, wobei im letzteren Fall die andere Messeinheit den Lichtstrahl zurückreflektiert. Typischerweise wird zum Ermitteln der Ausrichtung der Wellen zudeinander die Lage des Auftreffpunkts des Lichtstrahls in mehreren Rotationswinkel-Positionen ermittelt, wozu die Messeinheiten entlang der Umfangsflächen der Wellen verschoben werden oder die Wellen mit den an die Umfangsflächen angesetzten Messeinheiten gedreht werden.

In der DE 33 20 163 A1 und der DE 39 11 307 A1 sind Wellenausrichtungs-Messvorrichtungen beschrieben, bei welchen die erste Messeinheit einen Lichtstrahl aussendet, der von einem Spiegelprisma der zweiten Messeinheit auf einen optischen Detektor der ersten Messeinheit zurückreflektiert wird.

In der DE 33 35 336 A1 ist eine Wellenausrichtungs-Messvorrichtung beschrieben, bei welcher sowohl die erste als auch die zweite Messeinheit jeweils einen Lichtstrahl aussenden und einen optischen Detektor aufweisen, wobei der Lichtstrahl jeweils auf den Detektor der anderen Messeinheit gerichtet wird.

Eine nach diesem Prinzip arbeitende Wellenausrichtungs-Messvorrichtung ist auch in der US 6,873,931 B1 beschrieben, wobei die beiden Messeinheiten jeweils mit zwei zweiachsigen Beschleunigunsgsensoren zur automatischen Erfassung des Drehwinkels der Welle versehen sind.

Aus der DE 38 14 466 A1 ist eine Wellenausrichtungs-Messvorrichtung bekannt, bei welcher die erste Messeinheit einen Lichtstrahl aussendet, der auf zwei in axialer Richtung hintereinander angeordnete optische Detektoren der zweiten Messeinheit fällt.

Aus der WO 03/067187 A1 ist eine Wellenausrichtungs-Messvorrichtung bekannt, bei welcher die erste Messeinheit einen fächerförmigen Strahl aussendet, der auf zwei in axialer Richtung hintereinander angeordnete optische Detektoren der zweiten Messeinheit fällt.

Aus der WO 00/28275 A1 ist eine Wellenausrichtungs-Messvorrichtung bekannt, bei welcher zwei Messeinheiten an jeweils eine Stirnseite der beiden Wellen angebracht werden, wobei die erste Messeinheit einen fächerförmigen Lichtstrahl aussendet, der drei in einer Ebene der zweiten Messvorrichtung angeordnete Markierungsstifte seitlich trifft.

In der EP 0 962 746 A2 ist eine Wellenausrichtungs-Messvorrichtung beschrieben, bei welcher die erste Einheit eine Quelle für einen Lichtstrahl in einer ersten Farbe, einen Strahlteiler sowie einen farbempfindlichen CCD-Detektor und die zweite Einheit eine Quelle für einen Lichtstrahl in einer zweiten Farbe sowie einen Farbteiler (farbselektiver Strahlteiler) aufweist, der für die erste Farbe reflektierend und für die zweite Farbe transmittierend ist, wobei die Lichtquelle der zweiten Einheit von der ersten Einheit aus gesehen hinter dem Farbteiler angeordnet ist und die Lichtquelle der ersten Einheit von der zweiten Einheit aus gesehen hinter dem Strahlteiler angeordnet ist. Der von der ersten Einheit ausgesendete Lichtstrahl durchdringt zunächst den Strahlteiler der ersten Einheit und wird dann an dem Farbteiler der zweiten Einheit reflektiert, wobei dieser reflektierte Strahl wiederum an dem Strahlteiler der ersten Einheit reflektiert wird, um auf den Detektor zu gelangen. Der Lichtstrahl aus der zweiten Einheit durchdringt zunächst den Farbteiler der zweiten Einheit und wird von dem Strahlteiler der ersten Einheit auf den Detektor reflektiert.

In der EP 2 093 537 A1 ist Wellenausrichtungs-Messvorrichtung beschrieben, bei welcher die erste Messeinheit einen aufgefächerten Lichtstrahl aussendet, der auf zwei seitlich in Abstand zueinander parallel angeordnete optische Streifendetektoren der zweiten Messeinheit fällt, wobei die Längsrichtung der Detektoren senkrecht zu der Fächerebene des Lichtstrahls angeordnet ist.

Bei allen hier gewürdigten Wellenausrichtungs-Messvorrichtungen wird jeweils der Auftreffpunkt eines Lichtstrahls auf einer Detektorfläche ermittelt und ausgewertet.

Aus der DE 40 41 723 A1 ist eine Vorrichtung zur Bestimmung der Position eines Messpunkts relativ zu einem Bezugspunkt zur Steuerung oder Kontrolle des Vortriebs einer Bohrung bekannt, welche mehrere Messstationen aufweist, die in der Bohrung bzw. am Bohrkopf angeordnet sind und jeweils eine Kamera mit einer Markierung aufweisen, wobei jede Kamera die Markierung der benachbarten Kamera bzw. Messstation aufnimmt.

Aus der WO 2010/042039 A1 ist eine Wellenausrichtungsmessvorrichtung bekannt, bei welcher jede der beiden Messeinheiten mit einer in einem Gehäuse angeordneten Kamera versehen ist, wobei die der anderen Einheit zugewandte Gehäuseseite mit einem optischen Muster versehen ist, welches von der gegenüberliegende Kamera aufgenommen wird. Die mit dem Muster versehene Gehäuseseite ist dabei jeweils mit einer Öffnung versehen, durch welche das gegenüberliegende Muster abgebildet wird. Bei einer alternativen Ausführung ist eine der beiden Einheiten nur mit einer Kamera, nicht aber mit einem Muster versehen, während die andere Einheit keine Kamera aufweist, jedoch mit einem dreidimensionalen Muster versehen ist.

In der EP 1 211 480 A2 ist eine Wellenausrichtungsmessvorrichtung beschrieben, bei welcher die erste Messeinheit mit einer Lichtquelle versehen ist, welche einen Lichtstrahl auf die mit einer Mattscheibe versehenen zweiten Messeinheit richtet; die der ersten Messeinheit abgewandte Seite der Mattscheibe wird mittels einer entsprechenden Optik auf einen ebenfalls Teil der zweiten Messeinheit bildenden Bilddetektor abgebildet.

In der DE 10143 812 A1 und der DE 101 17 390 A1 ist eine Wellenausrichtungsmessvorrichtung beschrieben, bei welcher die erste Messeinheit eine Lichtquelle zum Erzeugen eines aufgefächerten Strahls aufweist und die gegenüberliegende zweite Messeinheit ein teilreflektierendes optisches System mit rückwärtiger Mattscheibe sowie eine Kamera aufweist, die die der ersten Messeinheit abgewandte Seite der Mattscheibe mit einem primären Lichtfleck des direkt von der Lichtquelle kommenden Strahls und mit einem sekundären Lichtfleck des von dem teilreflektierenden optischen System der zweiten Messeinheit und einem Reflektor an der Stirnseite der ersten Messeinheit reflektierten Strahls aufnimmt.

Aus der DE 10 2006 023 926 A1 ist eine Vorrichtung zur relativen Lagebestimmung zweier Körper bekannt. Aus der EP 1 154 229 A2 ist eine Vorrichtung zur quantitativen Beurteilung der fluchtenden Lage zweier Maschinenteile bekannt. Aus der DE 102 52 082 A1 ist unter anderem ein Positionsbestimmungssystem bekannt. Aus der DE 10 2008 037 176 A1 ist eine Vorrichtung zur Bestimmung der Richtung eines Lichtstrahls bekannt.

Von der Firma Wente CamSorik GmbH, 38108 Braunschweig, Deutschland, ist unter der Bezeichnung LaserTrac ein Laserempfänger mit Kamera für Maschinenvermessung erhältlich.

Es ist Aufgabe der vorliegenden Erfindung, eine Vorrichtung zum Ermitteln der Lage zweier mechanischer Elemente zueinander, insbesondere zur Wellenausrichtungsmessung, zu schaffen, welche besonders einfach, flexibel und kostengünstig ausgebildet ist. Es ist ferner Aufgabe der Erfindung, ein entsprechendes Verfahren zu schaffen.

Diese Aufgabe wird erfindungsgemäß gelöst durch eine Vorrichtung gemäß Anspruch 1 sowie durch ein Verfahren gemäß Anspruch 13.

Bei der erfindungsgemäßen Lösung wird durch die Verwendung einer Kamera und einer Streufläche, welche auf die Kamera abgebildet wird, anstelle der Verwendung eines optischen Detektors, auf welchen das reflektierte Lichtstrahlbündel direkt auftrifft, ein besonders einfaches und flexibles System realisiert. Insbesondere kann als Kamera ein für Endverbraucher konzipiertes Massenprodukt, wie beispielsweise eine fotografische Kamera oder ein Smartphone, die relativ kostengünstig erhältlich sind oder ohnehin aus anderen Gründen bereits beim Anwender vorhanden sind, verwendet werden.

Die Kamera ist als Teil der Messeinheit, welche die Mittel zum Erzeugen des Lichtstrahlenbündels aufweist, ausgebildet, oder ist an dieser Messeinheit angebracht.

Bevorzugte Ausgestaltungen der Erfindung ergeben sich aus den Unteransprüchen.

Im Folgenden wird die Erfindung beispielhaft anhand der beigefügten Zeichnungen näher erläutert. Dabei zeigen:
- Fig. 1:: eine seitliche, leicht perspektivische Ansicht eines ersten Beispiels einer erfindungsgemäßen Lageermittlungsvorrichtung;
- Fig. 2:: eine Frontansicht der Streufläche der Vorrichtung von Fig. 1;
- Fig. 3: eine perspektivische Ansicht der mit der Streufläche versehenen Messeinheit der Vorrichtung von Fig. 1 im praktischen Einsatz;
- Fig. 4: eine schematische seitliche Ansicht einer nicht erfindungsgemäßen Ladeermittlungsvorrichtung; und
- Fig. 5: eine schematische Darstellung, wie unter Verwendung des Strahlensatzes eine perspektivische Verzerrung des Abbilds der Streufläche auf der Kamera korrigiert werden kann; und

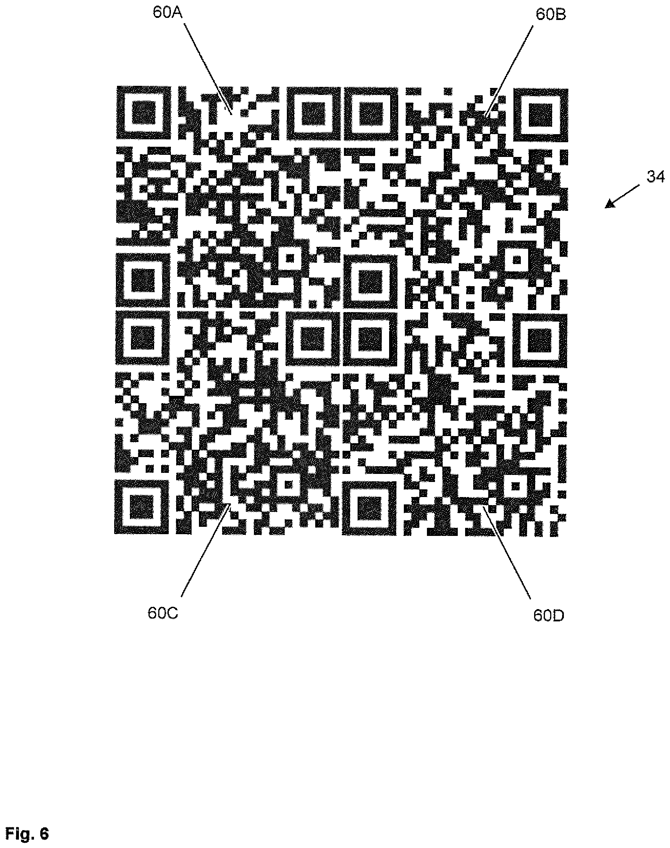

- Fig. 6: ein Beispiel einer mit vier QR-Codes versehenen Streufläche.

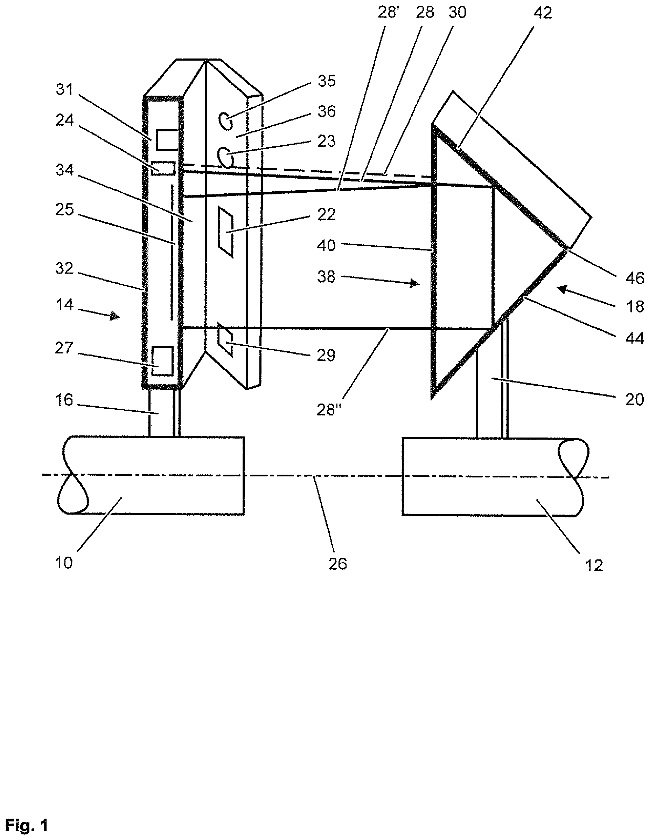

In den Fig. 1 bis 3 ist ein erstes Beispiel einer erfindungsgemäßen Vorrichtung zur Ermittlung der Ausrichtung einer ersten Welle 10 einer (nicht gezeigten) Maschine und einer zweiten Welle 12 einer (nicht gezeigten) Maschine zueinander gezeigt. Die Vorrichtung umfasst eine erste Messeinheit 14 mit einem Element 16 zum Ansetzen an eine Umfangsfläche der ersten Welle 10 sowie eine zweite Messeinheit 18 mit einem Element 20 zum Ansetzen an die Umfangsfläche der zweiten Welle 12.

Die beiden Wellen 10 und 12 sind möglichst fluchtend hintereinander bezüglich einer Referenzachse 26 angeordnet, wobei die Vorrichtung mit den beiden Messeinheiten 14, 18 dazu dient, einen eventuellen Winkelversatz und/oder Parallelversatz bezüglich der Referenzachse 26 bzw. relativ zueinander zu bestimmen. Die Vorrichtung umfasst typischerweise auch Mittel zum Anzeigen des Ergebnisses bezüglich Winkelversatz bzw. Parallelversatz (in den Figuren nicht dargestellt).

Die erste Messeinheit 14 umfasst eine Lichtquelle 24 zum Erzeugen eines Lichtstrahlenbündels 28, einen Kollimator (nicht dargestellt) zum Kollimieren des Lichtstrahlenbündels 28, eine Streufläche 34 sowie eine Kamera 36 zur Aufnahme von Bildern der Streufläche 34.

Die Kamera 36 weist eine Optik 35 auf, um die Streufläche 34 auf einen Kamerasensor (nicht dargestellt) abzubilden. Die Kamera 36 kann dabei beispielsweise seitlich schräg zur Streufläche 34 angebracht sein, um das Auftreffen eines an der zweiten Messeinheit 18 reflektierten Lichtstrahls zumindest im zentralen Bereich der Streufläche 34 nicht zu behindern.

Die Streufläche 34 ist der zweiten Messeinheit 18 zugewandt, wenn sich die beiden Messeinheiten 14, 18 in einer Messposition befinden. Die Lichtquelle 24 kann beispielsweise von der zweiten Messeinheit 18 aus gesehen hinter der Streufläche 34 angeordnet sein und das Lichtstrahlbündel 28 durch eine entsprechende Öffnung in der Streufläche 34 abstrahlen.

Die zweite Messeinheit 18 weist eine Reflektoranordnung 38 auf, die eine der ersten Messeinheit 14 zugewandte Frontfläche 40 und eine erste rückwärtige Fläche 42 sowie eine zweite rückwärtige Fläche 44 aufweist, wobei die rückwärtigen Flächen 42, 44 unter einem Winkel, typischerweise einem rechten Winkel zueinander angeordnet sind und dabei eine Dachkante 46 zwischen sich bilden; in den gezeigten Beispielen ist die Reflektoranordnung als so genanntes Porro-Prisma (auch als "Dachkantprisma" bezeichnet) ausgebildet, wobei die beiden parallelen Seitenflächen des Prismas von kongruenten rechtwinkligen Dreiecken gebildet werden, die von zu den Dreiecksflächen senkrecht stehenden Begrenzungsflächen verbunden werden. Die Dachkante 46 steht dabei im Wesentlichen tangential zu den Umfangsflächen der Wellen 10, 12.

Die Frontfläche 40 ist als teilreflektierende Fläche für das Strahlenbündel 28 ausgebildet, wobei ein erster Teil 28' des Strahlenbündels von der Frontfläche 40 in Richtung der Streufläche 34 reflektiert wird, während ein zweiter Teil 28" des Strahlenbündels 28 durch die Frontfläche 40 hindurch in Richtung der ersten rückwärtigen Fläche 42 transmittiert wird, um an der ersten rückwärtigen Fläche 42 zur zweiten rückwärtigen Fläche 44 hin reflektiert zu werden und von dort durch die Frontfläche 40 hindurch in Richtung der Streufläche 34 reflektiert zu werden.

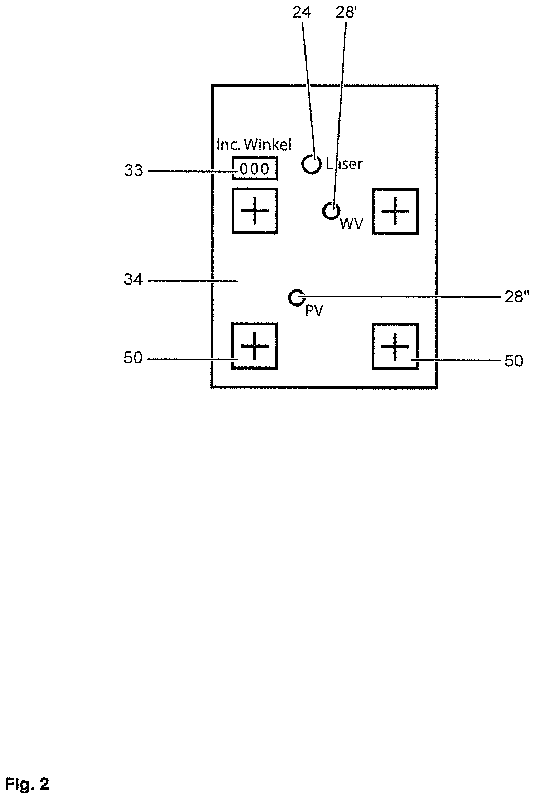

Im Beispiel von Fig. 1 und 2 sind die Auftreffpunkte (d.h. die Lichtflecke) des Lichtstrahlbündels 28' bzw. 28" auf der Streufläche 34 mit WV bzw. PV bezeichnet. Vorzugsweise wird die Reflektivität der Frontfläche 40 für das Lichtstrahlbündel 28 so gewählt, dass sich die Intensitäten der beiden reflektierten Lichtstrahlbündel 28' bzw. 28" unterscheiden, wodurch die beiden Auftreffpunkte WV bzw. PV auf der Streufläche 34 unterschieden werden können.

Gemäß einer abgewandelten Ausführungsform kann die Anordnung von Fig. 1 und 2 mit einer Lichtquelle 24 ausgestattet sein, welche zusätzlich zu dem ersten Lichtstrahlenbündel 28 ein zweites Lichtstrahlenbündel 30 (in Fig. 1 gestrichelt dargestellt) abgeben kann, wobei die beiden Lichtstrahlenbündel 28, 30 im Wesentlichen in die gleiche Richtung abgestrahlt werden, sich jedoch spektral unterscheiden (beispielsweise kann die Lichtquelle 24 als Dual-Wave-Laserdiode ausgebildet sein, die ein Lichtstrahlbündel bei etwa 660 nm im roten Bereich und ein Lichtstrahlbündel bei etwa 780 nm im infraroten Bereich abgibt; alternativ kann die Lichtquelle 24 auch zwei verschiedenfarbige Laserdioden aufweisen).

In diesem Fall ist die Frontfläche 40 der Reflektoranordnung 38 als Farbteiler ausgebildet, wobei sie beispielsweise für das erste Lichtstrahlbündel 28 stärker reflektierend als für das zweite Lichtstrahlbündel 30 und entsprechend für das zweite Lichtstrahlbündel 30 stärker transmittierend als für das erste Lichtstrahlbündel 28 ausgebildet sein kann. Das in Fig. 1 mit 28" bezeichnete reflektierte Lichtstrahlbündel entspricht dann dem zweiten Lichtstrahlbündel 30, nachdem es von der Frontfläche 40 transmittiert und von den beiden rückwärtigen Flächen 42, 44 reflektiert wurde. Das in Fig. 1 mit 28' bezeichnete Lichtstrahlbündel entspricht dann dem an der Frontfläche 40 reflektierten ersten Lichtstrahlbündel 28.

Auf diese Weise unterscheiden sich die beiden Auftreffpunkte WV bzw. PV durch ihre spektrale Zusammensetzung und können mittels einer farbempfindlichen Kamera 36 leicht unterschieden werden.

Bei der in Fig. 1 und 2 gezeigten Anordnung ist der Auftreffpunkt WV des an der Frontfläche 40 reflektierten Strahlenbündels 28' ein Maß für den Winkelversatz der beiden Wellen 10, 12, und der Auftreffpunkt PV des an den beiden rückseitigen Flächen 42, 44 reflektierten Strahlenbündels 28" ist ein Maß für den Parallelversatz der beiden Wellen 10, 12.

Hinter der Streufläche 34 (von der zweiten Messeinheit 18 aus gesehen) weist die erste Messeinheit 14 ein Gehäuse 32 auf, welches die Lichtquelle 24 und die zugehörige Elektronik enthält. Die Lichtquelle 24 ist vorzugsweise zufällig ("randomized") gepulst, um die Schwingungsanfälligkeit gering zu halten. Ferner enthält das Gehäuse 32 die Stromquelle (Batterien oder Akkus) für die Lichtquelle 24, nebst geeigneter Power-Management-Elektronik. Insgesamt sollte das Gehäuse 32 nicht wesentlich dicker als die typischerweise zur Anbindung an das Ansetzelement 16 vorgesehenen Haltestangen (in Fig. 1 nicht gezeigt) sein.

Die erste Messeinheit 14 weist vorzugsweise ein Inklinometer auf, um den Neigungswinkel der ersten Messeinheit 14 und damit die Drehwinkelposition der mit der ersten Messeinheit 14 versehenen Welle 10 zu bestimmen. Ein solches Inklinometer 31 mit einer Anzeige 33 kann beispielsweise in das Gehäuse 32 integriert sein, siehe Fig. 1 und 2. Das Inklinometer 31 kann dabei beispielsweise als MEMS-Inklinometer ausgebildet sein.

Die erste Messeinheit 14 ist vorzugsweise so ausgebildet, dass das bzw. die Lichtstrahlenbündel 28, 30 direkt ohne Zwischenschaltung eines reflektierenden Elements auf die Reflektoranordnung 38 der zweiten Messeinheit 18 gerichtet werden, d.h. zwischen der Lichtquelle 24 und der Reflektoranordnung 38 sind keine reflektierenden Elemente angeordnet.

Gemäß Fig. 2 ist die Streufläche 34 mit Messmarkierungen 50 versehen, die beispielsweise als Kreuze ausgebildet sein können, um die Auswertung der von der Kamera 36 aufgenommenen Bilder der Streufläche 34 zu erleichtern. Damit die Markierungen 50 auch in dunkler Umgebung sichtbar sind, kann beispielsweise eine externe Lichtquelle vorgesehen sein, z.B. eine LED 23 an der Kamera 36. Alternativ könnte eine Hintergrundbeleuchtung 25 der Streufläche 34 vorgesehen sein. Dabei könnte z.B. eine Metallfolie mit entsprechenden Ausschnitten auf eine Milchglasfläche (aus Glas oder Kunststoff) geklebt sein, wobei dann über das Gehäuse 32 diffuses weißes Licht eingekoppelt wird.

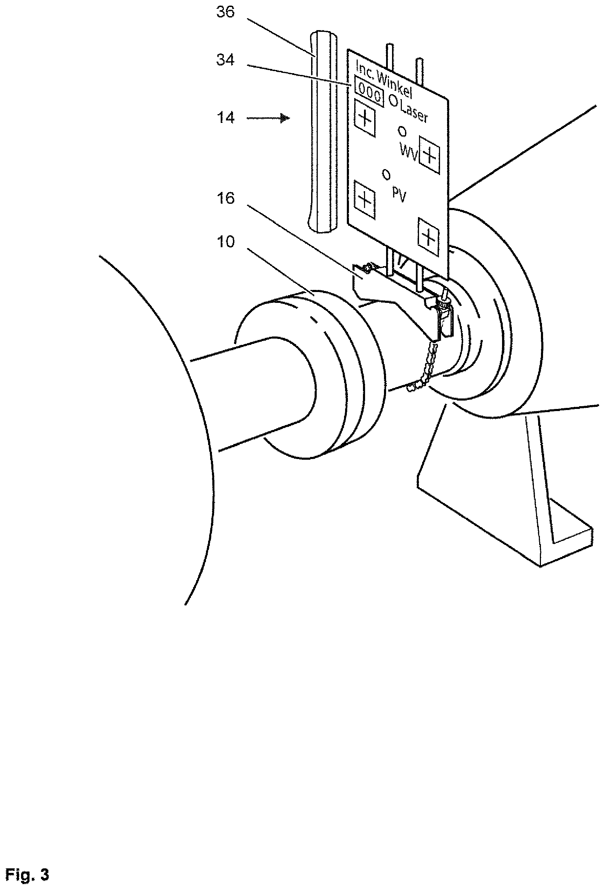

Vorzugsweise ist die Streufläche 34 im Wesentlichen eben ausgebildet. Gemäß Fig. 1 und 3 kann die Kamera 36 seitlich versetzt und verkippt bezüglich der Streufläche 34 angeordnet sein. Dabei kann die Kamera 36 beispielsweise auch unten an dem Ansetzelement 16 (bei dem es sich beispielsweise um eine Kettenspannvorrichtung handeln kann) montiert sein. Die Kamera 36 ist dabei so ausgerichtet, dass sie die Streufläche 34 möglichst vollständig auf dem Kamerasensor abbildet, jedoch die reflektierten Lichtstrahlenbündel 28', 28" nicht abgeschattet werden. Dabei könnte zusätzlich noch eine Streulichtblende (nicht gezeigt) vorgesehen sein, welche vorteilhaft auch zur mechanischen Stabilisierung der Kamera 36 und der Streufläche 34 verwendet werden könnte.

Die Kamera 36 kann beispielsweise als Kompaktkamera oder als Smartphone bzw. Mobiltelefonkamera ausgebildet sein. Vorzugsweise handelt es sich bei der Optik 35 um ein Festobjektiv, da ein solches stabiler ist als ein Zoomobjektiv. Vorzugsweise liegt die Auflösung des Kamerasensors bei mindestens 8 Megapixel. Die Kamera wird vorzugsweise im Makrobereich betrieben.

Sofern die Kamera als Smartphone ausgebildet ist, kann die Anzeige des Smartphones vorteilhafterweise als graphische Benutzeroberfläche (GUI) verwendet werden; ansonsten könnte ein zusätzliches Gerät in dieser Art wie beispielsweise ein Smartphone oder ein Tablet-Computer, zusätzlich zur Bedienerführung verwendet werden. Dabei kann beispielsweise auch eine Sprachsteuerung mit Headset oder der für 2013 zu erwartenden "Google-Brille ("GLASS") eingesetzt werden.

Bei der Auswertung der von der Kamera aufgenommenen Bilder kann wie folgt vorgegangen werden: Ziel der Auswertung ist es, die jeweiligen Mittelpunktkoordinaten der Auftreffpunkte BV bzw. PV der reflektierten Lichtstrahlbündel 28' bzw. 28" zu bestimmen. Dabei wird das aufgenommene Bild zunächst entzerrt, d.h. die durch die seitlich verkippte Anordnung der Kamera 36 verursachte perspektivische Verzerrung und Verzerrungen des optischen Systems sollen kompensiert werden. Dies kann beispielsweise anhand der Messmarken 50 erfolgen, deren "Weltkoordinaten" exakt bekannt sind. Der Auftrefffleck der Lichtstrahlenbündel 28' bzw. 28" kann anhand der Farbe vom Hintergrund separiert werden, so dass das Gebiet für die Mittelpunktsbestimmung eingeschränkt wird. Danach erfolgt die Mittelpunktsbestimmung mittels einer Schwerpunktabschätzung. Da die Weltkoordinaten der Messmarken 50 exakt bekannt sind, kann auf Pixelkoordinaten umgerechnet werden, so dass der Mittelpunkt der Lichtstrahlbündelauftreffpunkte WV und PV in Weltkoordinaten bestimmt werden kann.

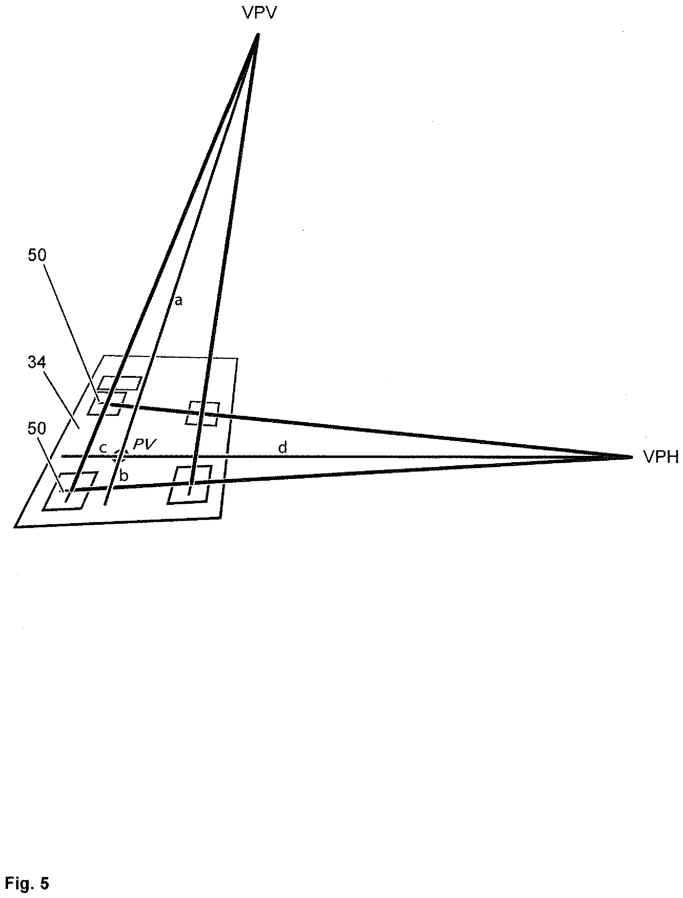

Eine andere Möglichkeit ist die Anwendung des Strahlensatzes zur Berechnung der Koordinaten der Auftreffpunkte, wie dies in Fig. 5 für den Auftreffpunkt PV schematisch angedeutet ist. Dabei wird mit dem horizontalen Fluchtpunkt VPH und dem vertikalen Fluchtpunkt VPV gearbeitet.

Auch der mittlere Durchmesser der Lichtstrahlbündelauftreffpunkte PV und WV kann ermittelt werden und zu einer Abschätzung des Abstands zwischen Lichtquelle und Reflektoranordnung, d.h. zwischen der ersten Messeinheit 14 und der zweiten Messeinheit 18, herangezogen werden.

Sofern die erste Messeinheit 14 mit einer Anzeige 33 für den von einem Inklinometer 31 gemessenen Neigungswinkel aufweist, ist die Kamera 36 vorzugsweise mit einer OCR-Funktion versehen, um den Wert dieses Winkels zu erfassen; alternativ kann eine Übertragung des Winkelwerts direkt zur Kamera 36 erfolgen, beispielsweise über eine Bluetooth-Strecke.

Sofern es sich bei der Kamera 36 um ein Smartphone handelt, kann auch das darin üblicherweise integrierte Inklinometer 29 für die Bestimmung des Neigungswinkels verwendet werden.

Bei der Auswertung der von der Kamera aufgenommenen Bilder kann beispielsweise auch eine Korrektur von systematischen Abbildungsfehlern, wie sie beispielsweise durch die Prismenkante 46 verursacht werden können, erfolgen.

Die Auswertung der Bilder kann in einer schematisch bei 22 angedeuteten Auswerteeinheit erfolgen, die Teil der Kamera bilden kann, insbesondere wenn es sich um ein Smartphone handelt, das ja ohnehin bereits von Haus aus mit einer relativ großen Rechenleistung ausgestattet ist.

Vor Beginn einer Messung werden die beiden Messeinheiten 14, 18 zunächst relativ zueinander justiert, so dass die reflektierten Lichtstrahlbündel 28', 28" in etwa in der Mitte der Streufläche 34 auftreffen. Zu diesem Zweck kann beispielsweise die zweite Messeinheit 18 mit einer Höhenverstellung (nicht gezeigt) zum Verstellen der Position der zweiten Messeinheit 18 in radialer Richtung bezüglich der Welle 12 und einer Winkelverstellung zwecks Verkippung der zweiten Messeinheit 18 bezüglich der radialen Richtung der Welle 12 und einer Verstellung der zweiten Messeinheit 18 um die radiale Richtung versehen sein.

Nach erfolgter Justierung der beiden Messeinheiten 14, 18 zueinander zeigen die Auftreffpositionen der reflektierten Strahlenbündel 28', 28" im Prinzip die Fehlausrichtung der beiden Wellen 10 und 12 zueinander an, wenn die beiden Wellen 10 und 12 gemeinsam mit den darauf befindlichen Messeinheiten 14, 18 um die Achse 26 gedreht werden, wobei dann der Verlauf des jeweiligen Auftreffpunkts in Abhängigkeit vom Drehwinkel (der wiederum mittels der Inklinometerfunktion bestimmt werden kann) verfolgt und in an sich bekannter Weise ausgewertet wird, um den vertikalen Versatz, horizontalen Versatz und den Winkelversatz der Wellen 10, 12 zu ermitteln (ein solches Verfahren ist beispielsweise in der DE 39 11 307 A1 für ein einzelnes Strahlenbündel beschrieben).

Falls die Reflektoranordnung 38 als Tripelprisma ausgebildet ist, gibt die Auftreffposition des an den rückwärtigen Flächen 42, 44 reflektierten Strahlenbündels 28" den Parallelversatz in beiden Richtungen an.

Nach Ermittlung der Fehlausrichtung wird in einer bestimmten Winkelposition eine Justierung der Wellen 10, 12 vorgenommen, wobei während der Wellenjustierung gemessen wird, um festzustellen, wann die Fehlausrichtung am besten korrigiert ist. Ein solches Verfahren ist beispielsweise ebenfalls in der DE 39 11 307 A1 beschrieben.

Bei Verwendung eines Tripleprismas kann die Justierung der Wellen beispielsweise in der "0 Uhr"-Position der beiden Messeinheiten 14, 18 erfolgen. Bei Verwendung eines Porro-Prismas (auch als "Dachkantprisma" bezeichnet) kann die Justierung beispielsweise in der 3 Uhr- oder 9 Uhr-Position erfolgen.

Typischerweise sind während der Ausrichtungsmessung und während der Justierung der Wellen kontinuierlich in relativer hoher Rate von der Kamera Bilder der Streufläche 34 zu aufzunehmen und auszuwerten, wobei beispielsweise fünf Bilder pro Sekunde erstellt und verarbeitet werden können. Sofern es sich bei der Kamera um ein Smartphone handelt, kann die Bilderstellung und Auswertung beispielsweise in Form einer geeigneten App erfolgen.

Als Alternative zu einer kontinuierlichen Bildaufnahme kann der Aufnahmemodus beispielsweise auch so gewählt werden, dass die Bilderstellung in Abhängigkeit vom aktuellen Inklinationswinkel erfolgt, z.B. immer, wenn sich der Winkel um einen bestimmten Betrag, z.B. 1°, ändert.

Die Ausrichtvorrichtung kann optional ein Bluetooth-Headset umfassen, welches von der mit der Justierung der Wellen befassten Bedienperson während der Justierung getragen wird und welches dazu dient, die aktuell von der Auswerteeinheit 22 der als Smartphone ausgebildeten Kamera 36 ermittelten Versatzwerte drahtlos zu empfangen, um sie der Justierung der Wellen befassten Person akustisch darzubieten. Dies ist insofern vorteilhaft, als es typischerweise während der Justierung für die Bedienperson schwierig ist, das die Anzeige des Smartphones 36 abzulesen. Dabei könnte das Headset auch verwendet werden, um die Bluetooth-Verbindung für eine Sprachsteuerung des Smartphones 36 zu nutzen.

Alternativ könnte von der Bedienperson ein zweites Smartphone oder ein Tablet-Computer verwendet werden, um die Anzeige des als Kamera dienenden Smartphones 36 über eine Bluetooth-Verbindung (z.B. mittels VNC) in einer für die Bedienperson besser ablesbaren Weise darzustellen, wobei auch mittels Bildschirmberührung das Smartphone 36 über das zweite Smartphone oder den Tablet-Computer gesteuert werden könnte, s. auch WO 97/36146.

Typischerweise hat die abgebildete Fläche eine Größe von etwa 40 x 40 mm; dann entspricht ein Pixel etwa 20 µm, wenn die Auflösung der Kamera bei 8 Megapixel (entsprechend einer vertikalen Auflösung von etwa 2500 Pixel) liegt. Wenn eine Kompaktkamera mit beispielsweise 16 Megapixel verwendet wird, kann eine Auflösung von etwa 7 µm erzielt werden.

Grundsätzlich kann auch eine Kamera mit spezieller Optik verwendet werden, oder im Falle eines Smartphones kann eine Lupe vorgeschaltet werden. Die abzubildenden Abmessungen der Streufläche 34 können beispielsweise auch auf 20 x 20 mm bis 30 x 30 mm reduziert werden.

Dabei ist grundsätzlich vorstellbar, dass die Bilder von der Kamera drahtlos (beispielsweise per WLAN) beispielsweise an eine mobile Plattform übertragen werden. Dabei kann beispielsweise eine spezielle SD-Karte verwendet werden.

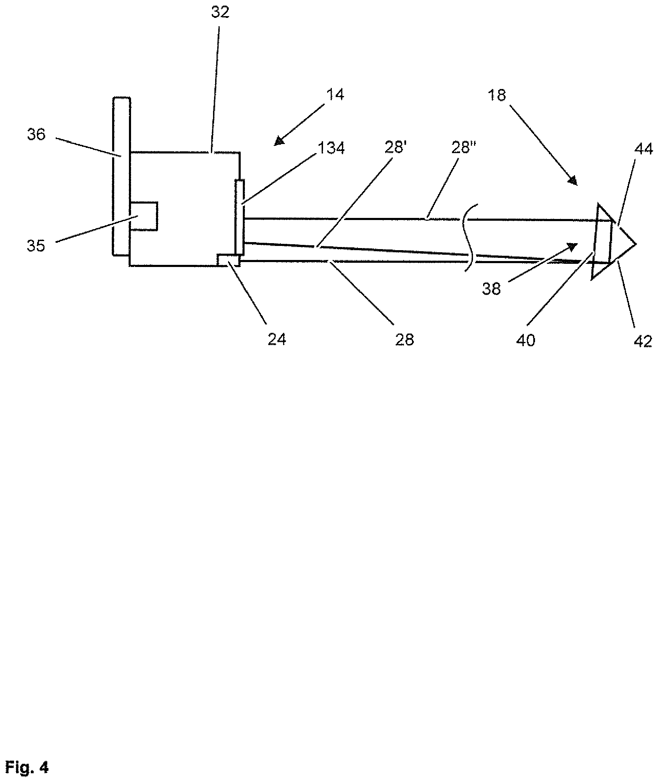

In Fig. 4 ist eine nicht zur vorliegenden Erfindung gehörende Lageermittlungsvorrichtung gezeigt, wobei die Streufläche 134 als Mattscheibe ausgebildet ist und die Kamera 36 nicht wie bei der Ausführungsform von Fig. 1 bis 3 die der zweiten Messeinheit 18 zugewandte Seite der Streufläche aufnimmt, sondern die von der zweiten Messeinheit 18 abgewandte Seite der Streufläche 134. Dabei ist die Kamera 36 von der zweiten Messeinheit 18 aus gesehen hinter der Mattscheibe 134 angeordnet. In dem in Fig. 4 gezeigten Beispiel ist die Kamera 36 fest mit dem Gehäuse 32 der ersten Messeinheit 14 verbunden. Bei einem handelsüblichen Smartphone würde sich dabei ein minimaler Abstand zwischen Kamera und Mattscheibe von etwa 50 bis 60 mm ergeben. Dieser Abstand kann verkürzt werden, indem die Kamera mit einer Vorsatzlinse (Weitwinkel oder Lupe) versehen wird.

Auch hier könnte ein mobiles Bedienelement über eine drahtlose Verbindung, z.B. Bluetooth, mit der Kamera 36 kommunizieren. Auch bei der Lageermittlungsvorrichtung von Fig. 4 kann eine Streulichtblende (nicht gezeigt) verwendet werden.

Vorzugsweise ist bei der Lageermittlungsvorrichtung von Fig. 4 die Lichtquelle 24 zweifarbig und die Frontfläche 40 als Farbteiler ausgebildet, wie dies bereits im Zusammenhang mit der Ausführungsform in Fig. 1 bis 3 beschrieben wurde.

Grundsätzlich kann die Kamera auch in den Fällen, in welchen sie bei der Aufnahme fest an der ersten Messeinheit 14 montiert ist, so mit der ersten Messeinheit 14 verbunden sein, dass sie nach erfolgter Ausrichtungsmessung bzw. Justierung von der ersten Messeinheit 14 gelöst und anderweitig verwendet werden kann. Dies ist insbesondere dann vorteilhaft, wenn es sich bei der Kamera um ein Smartphone handelt.

Grundsätzlich bietet die Verwendung von Smartphones als Kamera viele Vorteile: So sind solche Geräte sehr flexibel und leistungsfähig bezüglich der Programmierung und Gestaltung der graphischen Benutzeroberfläche; insbesondere sind auch Dinge wie Gestenerkennung, Tastatureinblendung und Lokalisierung möglich. Ferner kann der mit der Ausrichtungsmessung befasste Benutzer ein Gerät verwenden, mit dessen Bedienung er ohnehin grundsätzlich vertraut ist. Außerdem bieten Smartphones viele Schnittstellen, z.B. auch in einer Instandhalterdatenbank; insbesondere sind dabei drahtlose Schnittstellen verfügbar, die für die Anbindung an eine weitere mobile Bedienplattform, ein Headset (mit Echo- und Geräuschunterdrückung), eine Google-Brille, ein Vibrationsgürtel etc., verwendet werden können. Ferner kann das Smartphone während Zeiten, wenn es nicht für Ausrichtungsmessungen verwendet wird, in der üblichen Weise verwendet werden.

Gemäß einer Ausführungsform der Erfindung kann die Streufläche mit mehreren, typischerweise nach Art eines Rasters über die Streufläche, verteilten, zweidimensionalen optischen Codes, z.B. eines QR-Codes, versehen sein, welche auf die Streufläche aufgedruckt sind und zur Codierung von Informationen/Daten bzgl. der Streufläche bzw. der mit der Streufläche versehenen Messeinheit dienen, beispielsweise Seriennummer der Messeinheit, Abmessungen der Streufläche in x- und y-Richtung (z.B. in mm), Korrekturfaktoren bzgl. der Genauigkeit bzw. Fehlern des beim Aufdruck der Streufläche verwendeten Druckers (z.B. Betrag der Streckung oder Stauchung in x- und y-Richtung), Anzahl der Codes auf der Streufläche, Position des jeweiligen Codes im Raster (Nummer der Zeile, Nummer der Spalte), sowie Abstand der des jeweiligen Codes vom Ursprung des Koordinatensystems der Streufläche (z.B. in µm). Die einzelnen Codes können dabei beispielsweise so angeordnet sein, dass sie aneinander angrenzen, um die gesamte Streufläche abzudecken, s. z.B. Fig. 9, wo vier Codes 60A, 60B, 60C, 60D gezeigt sind. Die Anzahl und Auflösung der Codes sollte entsprechend der Auflösung des Druckers und der Kamera optimiert werden. Statt eines QR-Codes können grundsätzlich auch andere proprietäre graphische Codes verwendet werden.

Das Vorsehen von graphischen Codes auf der Streufläche hat folgende Vorteile: Es muss nicht die gesamte Reflektorfläche mit Sicherheitsrand fotograpfiert werden, was eine Erleichterung für den Anwender bedeutet. Die Codes können zwecks Erstellung eines Sollbilds rekonstruiert werden, so dass genügend Punkte für die Linearisierung des Bildes des Streufläche (innere und äußere Parameter) vorhanden sind. Anhand von bestimmten Marken können die Codes auf der Streufläche als soclhe identifiziert werden. Es kann eine höhere Genauigkeit bei der Ermittlung der Auftreffposition erzielt werden. Die Streufläche kann bzgl. der Genauigkeit des beim Aufdrucken der Streufläche verwendeten Druckers korrigiert werden.

## Patentansprüche

1. Vorrichtung zum Ermitteln der Lage eines ersten mechanischen Elements (10) und eines zweiten mechanischen Elements (12) zueinander, mit einer ersten Messeinheit (14) zum Ansetzen an das erste mechanische Element, einer zweiten Messeinheit (18) zum Ansetzen an das zweite mechanische Element, sowie einer Auswerteeinheit (22),
wobei die erste Messeinheit Mittel (24) zum Erzeugen mindestens eines Lichtstrahlbündels (28, 30), eine Streufläche (34) zum Streuen von auf die Streufläche auftreffendem Licht (WV, PV) und eine Kamera (36) zur Aufnahme von Bildern der Streufläche, welche auf die Kamera (36) abgebildet wird, aufweist, wobei die Kamera (36) eine Optik (35) aufweist, um die Streufläche (34) auf einen Kamerasensor abzubilden,
wobei die zweite Messeinheit eine Reflektoranordnung (38) aufweist, welche der ersten Messeinheit zugewandt ist, wenn die Messeinheiten an das jeweilige mechanische Element angesetzt sind, um das Lichtstrahlbündel (28', 28") auf die Streufläche zu reflektieren, wobei die Kamera (36) auf die der Reflektoranordnung (38) zugewandte Seite der Streufläche (34) gerichtet ist, und
wobei die Auswerteeinheit ausgebildet ist, um aus von der Kamera gelieferten Bilddaten die Auftreffposition des an der Reflektoranordnung reflektierten Lichtstrahlbündels auf der Streufläche und daraus die Lage des ersten mechanischen Elements und des zweiten mechanischen Elements zueinander zu ermitteln.

2. Vorrichtung gemäß Anspruch 1, **dadurch gekennzeichnet, dass** die Kamera (36) seitlich versetzt bzgl. der Streufläche (34) angeordnet ist oder dass die Kamera (36) seitlich versetzt und verkippt bzgl. der Streufläche (34) angeordnet ist.

3. Vorrichtung gemäß einem der vorhergehenden Ansprüche, **dadurch gekennzeichnet, dass** die erste Messeinheit (14) Mittel (33) zur lösbaren Befestigung der Kamera (36) aufweist.

4. Vorrichtung gemäß einem der vorhergehenden Ansprüche, **dadurch gekennzeichnet, dass** die Reflektoranordnung (38) eine erste rückwärtige Fläche (42) und eine zweite rückwärtige Fläche (44) aufweist, die unter einem Winkel zueinander angeordnet sind, um das Lichtstrahlenbündel von der ersten rückwärtigen Fläche zur zweiten rückwärtigen Fläche und von dort in Richtung der Streufläche (34) zu reflektieren.

5. Vorrichtung gemäß Anspruch 4, **dadurch gekennzeichnet, dass** die erste (42) und zweite rückwärtige Fläche (44) der Reflektoranordnung (38) in etwa senkrecht zueinander stehen oder dass die erste (42) und zweite rückwärtige Fläche (44) der Reflektoranordnung (38) in etwa senkrecht zueinander stehen und die Reflektoranordnung (38) als Prisma oder als Porro-Prisma oder als Tripel-Prisma ausgebildet ist.

6. Vorrichtung gemäß einem der Ansprüche 4 oder 5, **dadurch gekennzeichnet, dass** eine der ersten Messeinheit (14) zugewandte Fläche (40) der Reflektoranordnung (38) ausgebildet ist, um einen Teil des Lichtstrahlenbündels (28) zu der Streufläche zu reflektieren und einen Teil des Lichtstrahlenbündels zu der ersten rückwärtigen Fläche zu transmittieren.

7. Vorrichtung gemäß einem der Ansprüche 1 bis 5, **dadurch gekennzeichnet, dass** es sich bei dem Lichtstrahlenbündel um ein erstes Lichtstrahlenbündel (28) handelt und die Mittel zum Erzeugen des ersten Lichtstrahlenbündels auch zum Erzeugen eines zweiten Lichtstrahlenbündels (30) ausgebildet sind, wobei die beiden Lichtstrahlenbündel im wesentlichen in die gleiche Richtung abgestrahlt werden, sich aber spektral unterscheiden, wobei eine der ersten Messeinheit zugewandte Fläche (40) der Reflektoranordnung (38) als Farbteiler und dabei für das erste Lichtstrahlenbündel stärker reflektierend als für das zweite Lichtstrahlenbündel und für das zweite Lichtstrahlenbündel stärker transmittierend als für das erste Lichtstrahlenbündel ausgebildet ist, wobei mindestens eine erste rückwärtige Fläche (42) der Reflektoranordnung vorgesehen ist, um das transmittierende zweite Lichtstrahlenbündel durch die der ersten Messeinheit zugewandten Fläche hindurch zu reflektieren.

8. Vorrichtung gemäß einem der vorhergehenden Ansprüche, **dadurch gekennzeichnet, dass** es sich bei dem ersten mechanischen Element um eine erste Welle (10) und bei dem zweiten mechanischen Element um eine zweite Welle (12) handelt, wobei die erste Messeinheit (14) zum Ansetzen an eine Umfangsfläche der ersten Welle und die zweite Messeinheit (18) zum Ansetzen an eine Umfangsfläche der zweiten Welle ausgebildet sind.

9. Vorrichtung gemäß Anspruch 8, **dadurch gekennzeichnet, dass** die Auswerteeinheit (22) ausgebildet ist, um aus in unterschiedlichen Drehwinkelpositionen der Wellen (10, 12) aufgenommenen Bilddaten Winkelversatz und vertikalen bzw. horizontalen Versatz der Wellen zu ermitteln.

10. Vorrichtung gemäß Anspruch 5 und 9, **dadurch gekennzeichnet, dass** eine Dachkante (46) des Prismas (38) im wesentlichen tangential bzgl. der Wellenumfangsflächen orientiert ist.

11. Vorrichtung gemäß einem der vorhergehenden Ansprüche, **dadurch gekennzeichnet, dass** die Kamera ein Objektiv (35) mit fester Brennweite aufweist und/oder dass die Auswerteeinheit (22) ausgebildet ist, um die von der Kamera (36) gelieferten Bilddaten bzgl. einer Verkippung zur Streufläche (34) zu entzerren und/oder dass die erste Messeinheit (14) ein Inklinometer (27) aufweist und/oder dass die Kamera (36) ein Inklinometer (29) aufweist und/oder dass die erste Messeinheit (14) eine Hintergrundbeleuchtung (25) für die Streufläche (34) aufweist und/oder dass die Kamera (36) Mittel (23) zum Beleuchten der Streufläche (34) aufweist und/oder dass die Kamera (36) als Smartphone ausgebildet ist.

12. Vorrichtung gemäß einem der vorhergehenden Ansprüche, **dadurch gekennzeichnet, dass** die Streufläche (34) mit Messmarken (50) versehen ist und/oder dass die Streufläche (34) mit mehreren über die Streufläche verteilten graphischen Codes (60A, 60B, 60C, 60D) zur Codierung von Daten betreffend die Streufläche und/oder die mit der Streufläche versehenen Messeinheit versehen ist.

13. Verfahren zum Ermitteln der Lage eines ersten mechanischen Elements (10) und eines zweiten mechanischen Elements (12) zueinander, wobei eine erste Messeinheit (14) an das erste mechanische Element angesetzt wird und eine zweite Messeinheit (18) an das zweite mechanische Element gesetzt wird,
mittels der ersten Messeinheit ein Lichtstrahlbündel (28, 30) erzeugt wird,
mittels einer Reflektoranordnung (38) der zweiten Messeinheit das Lichtstrahlbündel auf eine Streufläche (134) der ersten Messeinheit reflektiert wird,
eine als Teil der ersten Messeinheit (14) ausgebildete oder an der ersten Messeinheit (14) angebrachte Kamera (36) in Position gebracht wird, wobei die Kamera (36) auf die der Reflektoranordnung (38) zugewandte Seite der Streufläche (34) gerichtet wird, und mindestens ein Bild der Streufläche, welche auf die Kamera (36) abgebildet wird, aufgenommen wird, wobei die Kamera (36) eine Optik (35) aufweist, um die Streufläche (134) auf einen Kamerasensor abzubilden, und
das mindestens eine Bild ausgewertet wird, um die Auftreffposition (WV, PV) des an der Reflektoranordnung reflektierten Lichtstrahlbündels auf der Streufläche und daraus die Lage des ersten mechanischen Elements und des zweiten mechanischen Elements zueinander zu ermitteln.

## Claims

1. Apparatus for ascertaining the position of a first mechanical element (10) and a second mechanical element (12) with respect to one another, comprising a first measuring unit (14) for positioning on the first mechanical element, a second measuring unit (18) for positioning on the second mechanical element, and an evaluation unit (22),
wherein the first measuring unit comprises means (24) for producing at least one light beam (28, 30), a scattering surface (34) for scattering light (WV, PV) that strikes the scattering surface and a camera (36) for recording images of the scattering surface, the latter being imaged on the camera (36), wherein the camera (36) comprises an optical unit (35) to image the scattering surface (34) on a camera sensor,
wherein the second measuring unit comprises a reflector arrangement (38) that, in order to reflect the light beam (28', 28") onto the scattering surface, faces the first measuring unit when the measuring units are positioned on the respective mechanical elements, wherein the camera (36) is directed on the side of the scattering surface (34) facing the reflector arrangement (38), and
wherein the evaluation unit is embodied to ascertain the point of incidence of the light beam reflected at the reflector arrangement on the scattering surface from the image data supplied by the camera and ascertain the position of the first mechanical element and of the second mechanical element with respect to one another therefrom.

2. Apparatus according to Claim 1, **characterized in that** the camera (36) is disposed with a lateral offset with respect to the scattering surface (34) or **in that** the camera (36) is disposed with a lateral offset and a tilt with respect to the scattering surface (34).

3. Apparatus according to either of the preceding claims, **characterized in that** the first measuring unit (14) comprises means (33) for releasably fastening the camera (36).

4. Apparatus according to any one of the preceding claims, **characterized in that** the reflector arrangement (38) has a first back surface (42) and a second back surface (44) which are disposed at an angle with respect to one another in order to reflect the light beam from the first back surface to the second back surface and, from there, in the direction of the scattering surface (34) .

5. Apparatus according to Claim 4, **characterized in that** the first (42) and the second back surface (44) of the reflector arrangement (38) are approximately perpendicular to one another or **in that** the first (42) and second back surface (44) of the reflector arrangement (38) are approximately perpendicular to one another and the reflector arrangement (38) is embodied as a prism or as a Porro prism or as a corner cube.

6. Apparatus according to either of Claims 4 and 5, **characterized in that** a surface (40) of the reflector arrangement (38) facing the first measuring unit (14) is embodied to reflect a portion of the light beam (28) to the scattering surface and to transmit a portion of the light beam to the first back surface.

7. Apparatus according to any one of Claims 1 to 5, **characterized in that** the light beam is a first light beam (28) and the means for producing the first light beam are also embodied to produce a second light beam (30), wherein the two light beams are emitted substantially in the same direction but differ spectrally, wherein a surface (40) of the reflector arrangement (38) facing the first measuring unit is embodied as a colour splitter and, in the process, is embodied to be more reflective for the first light beam than for the second light beam and to be more transmissive for the second light beam than for the first light beam, wherein at least one first back surface (42) of the reflector arrangement is provided to reflect the transmitted second light beam through the surface facing the first measuring unit.

8. Apparatus according to any one of the preceding claims, **characterized in that** the first mechanical element is a first shaft (10) and the second mechanical element is a second shaft (12), wherein the first measuring unit (14) is embodied to be positioned on a circumferential surface of the first shaft and the second measuring unit (18) is embodied to be positioned on a circumferential surface of the second shaft.

9. Apparatus according to Claim 8, **characterized in that** the evaluation unit (22) is embodied to ascertain an angle offset and vertical or horizontal offset of the shafts from image data recorded at different rotational angle positions of the shafts (10, 12).

10. Apparatus according to Claims 5 and 9, **characterized in that** a roof edge (46) of the prism (38) is oriented substantially in tangential fashion with respect to the shaft circumferential surfaces.

11. Apparatus according to any one of the preceding claims, **characterized in that** the camera comprises a lens (35) with a fixed focal length and/or **in that** the evaluation unit (22) is embodied to rectify the image data supplied by the camera (36) in respect of a tilt with respect to the scattering surface (34) and/or **in that** the first measuring unit (14) comprises an inclinometer (27) and/or **in that** the camera (36) comprises an inclinometer (29) and/or **in that** the first measuring unit (14) has a background illumination (25) for the scattering surface (34) and/or **in that** the camera (36) comprises means (23) for illuminating the scattering surface (34) and/or **in that** the camera (36) is embodied as a smartphone.

12. Apparatus according to any one of the preceding claims, **characterized in that** the scattering surface (34) is provided with measurement markers (50) and/or **in that** the scattering surface (34) is provided with a plurality of graphic codes (60A, 60B, 60C, 60D) distributed over the scattering surface for the purposes of encoding data in relation to the scattering surface and/or the measuring unit provided with the scattering surface.

13. Method for ascertaining the position of a first mechanical element (10) and a second mechanical element (12) with respect to one another, wherein a first measuring unit (14) is positioned on the first mechanical element and a second measuring unit (18) is positioned on the second mechanical element,
a light beam (28, 30) is produced by means of the first measuring unit,
the light beam is reflected onto a scattering surface (134) of the first measuring unit by means of a reflector arrangement (38) of the second measuring unit,
a camera (36) embodied as part of the first measuring unit (14) or secured to the first measuring unit (14) is brought into position, wherein the camera (36) is directed onto the side of the scattering face (34) facing the reflector arrangement (38) and at least one image of the scattering surface that is imaged onto the camera (36) is recorded, wherein the camera (36) comprises an optical unit (35) in order to image the scattering surface (134) onto a camera sensor, and
the at least one image is evaluated in order to ascertain the point of incidence (WV, PV) of the light beam reflected at the reflector arrangement on the scattering surface and in order to ascertain the position of the first mechanical element and of the second mechanical element with respect to one another therefrom.

## Revendications

1. Dispositif pour déterminer la position d'un premier élément mécanique (10) et d'un deuxième élément mécanique (12) l'un par rapport à l'autre, comprenant une première unité de mesure (14) destinée à être appliquée contre le premier élément mécanique, une deuxième unité de mesure (18) destinée à être appliquée contre le deuxième élément mécanique, ainsi qu'une unité d'interprétation (22),
la première unité de mesure possédant des moyens (24) pour générer au moins un faisceau de rayons lumineux (28, 30), une surface de diffusion (34) destinée à diffuser la lumière (WV, PV) incidente sur la surface de diffusion et une caméra (36) destinée à enregistrer des images de la surface de diffusion, laquelle est représentée sur la caméra (36), la caméra (36) possédant une optique (35) pour représenter la surface de diffusion (34) sur un capteur de caméra,
la deuxième unité de mesure possédant un arrangement réflecteur (38), qui fait face à la première unité de mesure lorsque les unités de mesure sont appliquées contre l'élément mécanique respectif, afin de réfléchir le faisceau de rayons lumineux (28', 28") sur la surface de diffusion, la caméra (36) étant dirigée sur le côté de la surface de diffusion (34) qui fait face à l'arrangement réflecteur (38), et
l'unité d'interprétation étant configurée pour déterminer, à partir des données d'image délivrées par la caméra, la position d'incidence sur la surface de diffusion du faisceau de rayons lumineux réfléchi sur l'arrangement réflecteur et, à partir de celle-ci, la position du premier élément mécanique et du deuxième élément mécanique l'un par rapport à l'autre.

2. Dispositif selon la revendication 1, **caractérisé en ce que** la caméra (36) est disposée décalée latéralement par rapport à la surface de diffusion (34) ou **en ce que** la caméra (36) est disposée décalée latéralement et désalignée par rapport à la surface de diffusion (34).

3. Dispositif selon l'une des revendications précédentes, **caractérisé en ce que** la première unité de mesure (14) possède des moyens (33) destinés à la fixation amovible de la caméra (36).

4. Dispositif selon l'une des revendications précédentes, **caractérisé en ce que** l'arrangement réflecteur (38) possède une première surface arrière (42) et une deuxième surface arrière (44), lesquelles sont disposées selon un certain angle l'une par rapport à l'autre afin de réfléchir le faisceau de rayons lumineux de la première surface arrière vers la deuxième surface arrière et de là en direction de la surface de diffusion (34) .

5. Dispositif selon la revendication 4, **caractérisé en ce que** la première surface arrière (42) et la deuxième surface arrière (44) de l'arrangement réflecteur (38) sont approximativement perpendiculaires l'une à l'autre ou **en ce que** la première surface arrière (42) et la deuxième surface arrière (44) de l'arrangement réflecteur (38) sont approximativement perpendiculaires l'une à l'autre et l'arrangement réflecteur (38) est réalisé sous la forme d'un prisme ou d'un prisme de Porro ou d'un prisme triple.

6. Dispositif selon l'une des revendications 4 ou 5, **caractérisé en ce qu'**une surface (40) de l'arrangement réflecteur (38) qui fait face à la première unité de mesure (14) est configurée pour réfléchir une partie du faisceau de rayons lumineux (28) vers la surface de diffusion et pour transmettre une partie du faisceau de rayons lumineux vers la première surface arrière.

7. Dispositif selon l'une des revendications 1 à 5, **caractérisé en ce que** le faisceau de rayons lumineux est un premier faisceau de rayons lumineux (28) et les moyens destinés à générer le premier faisceau de rayons lumineux sont également configurés pour générer un deuxième faisceau de rayons lumineux (30), les deux faisceaux de rayons lumineux étant émis sensiblement dans la même direction, mais se différenciant sur le plan spectral, une surface (40) de l'arrangement réflecteur (38) qui fait face à la première unité de mesure étant réalisée sous la forme d'un séparateur de couleurs et étant réalisée manière à être de ainsi plus fortement réfléchissante pour le premier faisceau de rayons lumineux que pour le deuxième faisceau de rayons lumineux et plus fortement transmettrice pour le deuxième faisceau de rayons lumineux que pour le premier faisceau de rayons lumineux, au moins une première surface arrière (42) de l'arrangement réflecteur étant prévue pour réfléchir le deuxième faisceau de rayons lumineux transmetteur à travers la surface qui fait face à la première unité de mesure.

8. Dispositif selon l'une des revendications précédentes, **caractérisé en ce que** le premier élément mécanique est un premier arbre (10) et le deuxième élément mécanique est un deuxième arbre (12), la première unité de mesure (14) étant configurée pour être appliquée contre une surface périphérique du premier arbre et la deuxième unité de mesure (18) pour être appliquée contre une surface périphérique du deuxième arbre.

9. Dispositif selon la revendication 8, **caractérisé en ce que** l'unité d'interprétation (22) est configurée pour déterminer le décalage angulaire et le décalage vertical ou horizontal des arbres à partir des données d'image enregistrées dans différentes positions d'angle de rotation des arbres (10, 12).

10. Dispositif selon les revendications 5 et 9, **caractérisé en ce qu'**un champ supérieur (46) du prisme (38) est orienté de manière sensiblement tangentielle par rapport aux surfaces périphériques des arbres.

11. Dispositif selon l'une des revendications précédentes, **caractérisé en ce que** la caméra possède un objectif (35) à distance focale fixe et/ou **en ce que** l'unité d'interprétation (22) est configurée pour corriger les données d'image délivrées par la caméra (36) concernant un défaut d'alignement angulaire par rapport à la surface de diffusion (34) et/ou **en ce que** la première unité de mesure (14) possède un inclinomètre (27) et/ou **en ce que** la caméra (36) possède un inclinomètre (29) et/ou **en ce que** la première unité de mesure (14) possède un rétroéclairage (25) pour la surface de diffusion (34) et/ou **en ce que** la caméra (36) possède des moyens (23) servant à éclairer la surface de diffusion (34) et/ou **en ce que** la caméra (36) est réalisée sous la forme d'un Smartphone.

12. Dispositif selon l'une des revendications précédentes, **caractérisé en ce que** la surface de diffusion (34) est pourvue de repères de mesure (50) et/ou **en ce que** la surface de diffusion (34) est pourvue de plusieurs codes graphiques (60A, 60B, 60C, 60D) distribués sur la surface de diffusion servant au codage de données concernant la surface de diffusion et/ou l'unité de mesure pourvue de la surface de diffusion.

13. Procédé pour déterminer la position d'un premier élément mécanique (10) et d'un deuxième élément mécanique (12) l'un par rapport à l'autre, une première unité de mesure (14) étant appliquée contre le premier élément mécanique et une deuxième unité de mesure (18) étant appliquée contre le deuxième élément mécanique,
un faisceau de rayons lumineux (28, 30) étant généré au moyen de la première unité de mesure,
le faisceau de rayons lumineux étant réfléchi sur une surface de diffusion (134) de la première unité de mesure au moyen d'un arrangement réflecteur (38) de la deuxième unité de mesure,
une caméra (36), qui est réalisée en tant que partie de la première unité de mesure (14) ou montée sur la première unité de mesure (14), étant amenée en position, la caméra (36) étant dirigée sur le côté de la surface de diffusion (34) qui fait face à l'arrangement réflecteur (38), et au moins une image de la surface de diffusion, qui est représentée sur la caméra (36), étant enregistrée, la caméra (36) possédant une optique (35) pour représenter la surface de diffusion (134) sur un capteur de caméra, et
l'au moins une image étant interprétée afin de déterminer la position d'incidence (WV, PV) sur la surface de diffusion du faisceau de rayons lumineux réfléchi sur l'arrangement réflecteur et, à partir de celle-ci, la position du premier élément mécanique et du deuxième élément mécanique l'un par rapport à l'autre.
